# EUROPEAN PATENT SPECIFICATION

(11) **EP 2 138 334 B1**
(45) Date of publication and mention of the grant of the patent: **08.08.2012**
(21) Application number: 09007764.5
(22) Date of filing: 12.06.2009
(51) Int. Cl.: F04D 29/62, B60H 1/00, F04D 29/60

(54) **Air conditioning apparatus for use in a vehicle, tool and method for extraction of a component with respect to such an apparatus**
Klimaanlage zur Verwendung in einem Fahrzeug, Werkzeug und Verfahren zum Herausziehen eines Bauteils in Bezug auf eine solche Anlage
Appareil de climatisation à utiliser dans un véhicule, outil et procédé d'extraction d'un composant de cet appareil

(30) Priority: 25.06.2008 JP 2008166415
(43) Date of publication of application: 30.12.2009
(73) Proprietor: Calsonic Kansei Corporation, Saitama-shi Saitama 331-8501 (JP)
(72) Inventor: Sunaga, Yasushi, Saitama-shi Saitama 331-8501 (JP); Onda, Masaharu, Saitama-shi Saitama 331-8501 (JP); Ishikawa, Tsugutaka, Saitama-shi Saitama 331-8501 (JP); Kujirai, Toshisada, Saitama-shi Saitama 331-8501 (JP); Kurokawa, Katsuhiro, Saitama-shi Saitama 331-8501 (JP); Satori, Yousuke, Saitama-shi Saitama 331-8501 (JP); Tsukuda, Ryuji, Saitama-shi Saitama 331-8501 (JP); Takeshita, Norimitsu, Saitama-shi Saitama 331-8501 (JP)
(74) Representative: Zinsinger, Norbert

(56) References cited:
- EP-A- 1 731 339
- EP-A- 1 800 917
- DE-A1- 10 023 847
- US-A1- 2004 115 039

## Description

### BACKGROUND OF THE INVENTION

### Field of the Invention

The present invention relates to an air conditioning apparatus for use in a vehicle, a tool for replacement of a component with respect to the air conditioning apparatus for use in the vehicle, and a method for an extraction of the component with respect to the air conditioning apparatus for use in the vehicle, and, to describe the field of the present invention in further detail. More specifically, the present invention further relates to an air conditioning apparatus for use in a vehicle, comprising a blower unit, further comprising a pair of fans that are installed upon both sides of a motor, and a pair of scroll chambers that serve, by way of a rotation of the fans, to draw air into a unit housing, a tool for replacement of a component with respect to the air conditioning apparatus for use in the vehicle, which is employed in order to replace the blower unit, and a method for an extraction of the component with respect to the air conditioning apparatus for use in the vehicle, which is employed in order to extract the blower unit.

### Description of the Related Art

A conventional air conditioning apparatus for use in a vehicle, which is typically referred to as a twin fan type, and which includes a motor and two fans, a first and a second fan, which are installed upon both sides of the motor, and in a line with a common axis with the motor, is known from such as a publication of EP 1,731,339 B1, as an instance thereof.

Given such a conventional technology as is denoted herein, a blower unit, comprising the motor and the pair of fans thereupon, is emplaced upon an intake portion, which takes air into a unit housing, which further houses a thermal exchange device.

A first scroll casing portion, whereupon a first scroll chamber, which houses the first fan, is formed, and which has a pair of apertures upon either side thereof along a direction of an axis thereof, and a second scroll casing portion, whereupon a second scroll chamber, which houses the first fan, is formed, and which has a pair of apertures upon either side thereof along a direction of an axis thereof, is installed upon such an intake portion as is described herein.

In addition, an intake box, which is for an intake of air, is attached upon one aperture of each pair of apertures that is installed upon each respective scroll casing portion, and the other aperture of each pair of apertures that is installed upon each respective scroll casing portion is closed off with a cover material that is integrated with the motor.

The conventional technology such as is described herein facilitates replacing the blower unit in the event that a fault arises with the motor or the fan.

In other words, when extracting the blower unit, an anchor of the blower unit is disengaged, and the blower unit is moved until the second fan thereof has moved from the second scroll chamber, through the first scroll chamber, and has arrived at a location external to the first scroll chamber. In such a circumstance, the first fan passes from the first scroll chamber, through the aperture thereof upon the exterior side and is drawn out into the exterior thereto. The motor passes through the aperture upon the interior side of the first scroll casing portion, passes through an interior of the first scroll chamber, passes through the aperture thereof upon the exterior side, and is drawn out into the exterior thereto. After the second fan has passed through the aperture upon the interior side of the second scroll casing portion and been thus drawn out into the exterior thereto, the second fan passes through the aperture upon the interior side of the first scroll casing portion, passes through the interior of the first scroll chamber, passes further through the aperture thereof upon the exterior side, and is drawn out into the exterior thereto.

In addition, a replacement blower unit is moved in a reverse manner to the movement that is described herein, such that the replacement blower unit is moved from the aperture upon the exterior side of the first scroll casing portion toward the second scroll casing portion, along the direction of the axis thereof. Put another way, after passing through both aperture portions of the first scroll casing portion, the second fan is positioned within the second scroll chamber, by way of the aperture upon the interior side of the second scroll chamber. In addition, after passing through both aperture portions of the first scroll casing portion, the motor is positioned between both scroll casing portions thereupon. The first fan thus passes through the aperture upon the exterior side of the first scroll casing portion, and is thereby positioned within the first scroll chamber.

With respect to the conventional technology that is disclosed according to EP 1,731,339 B1, however, it is necessary to move the blower unit until the second fan passes through three apertures in the direction of the axis when replacing the blower unit, such that a distance of the movement thereof along the direction of the axis is long, making it difficult to secure a space that will accommodate such a movement of the blower unit upon a location of an installation of the air conditioning apparatus for use in the vehicle, and thereby imposing a restriction upon a degree of freedom of a design thereof.

In addition, when moving the blower unit along the direction of the axis, such as is described herein, it is necessary to construct both fans, the motor, and a holder that supports the motor so as not to interfere with the apertures that are installed upon each respective scroll casing portion, thereby limiting a possible distance for a movement in a direction that is orthogonal to the axis, demanding a precision in a work thereupon, and thus negatively affecting an operability thereof. In addition, enlarging each respective aperture in order to avoid the interference therewith, such as is described herein, leads to an increase in a size of the intake portion thereupon, as well as increasing a space of an outer periphery of the fan, thereby causing an efficiency of a wind flow therethrough to deteriorate.

### SUMMARY OF THE INVENTION

An object of the present invention is to provide an air conditioning apparatus for use in a vehicle, including a blower unit, a motor and a pair of fans that are caused by the motor to rotate, and which facilities an improvement in the degree of freedom of the design thereof, an improvement in the operability of the blower unit, and keeping the increase in the size of the intake portion under control.

In order to accomplish the above object, an air conditioning apparatus for use in a vehicle according to an embodiment of the present invention includes a blower unit, an intake portion, which is installed within a unit housing that accommodates a thermal exchange device, and which takes in air into an interior portion of the unit housing, a motor that is installed within the intake portion, and a first fan and a second fan that is installed upon both sides of the motor, along a comprising a motor, a first fan configured to be installed at one side of the motor in a direction of an axis of the motor, and a second fan configured to be installed at the other side of the motor in the direction of the axis of the motor, a first scroll casing portion configured to be installed upon the intake portion and to form a first scroll chamber configured to house the first fan and to direct a wind flow toward the unit housing, a second scroll casing portion disposed upon a common axis with the first scroll casing portion so as to sandwich the motor between the first and second scroll casing portions and to form a second scroll chamber configured to house the second fan and to direct a wind flow toward the unit housing, a first motor side aperture portion configured to be provided in one end portion of the first scroll casing portion in a direction of an axis of the first scroll casing portion and to be opened at a side of the motor at an internal diameter to be capable of passing the first fan through the first motor side aperture portion, a first intake side aperture portion configured to be provided in the other end portion of the first scroll casing portion in the direction of the axis of the first scroll casing portion and to be opened at a side opposite to the motor, a first intake box for an intake of an air being mounted upon the first intake side aperture portion, the first motor side aperture portion and the first intake side aperture portion being disposed along an axis identical to an axis of the blower unit, a second motor side aperture portion configured to be provided in one end portion of the second scroll casing portion in a direction of an axis of the second scroll casing portion and to be opened at a side of the motor at an internal diameter to be capable of passing the second fan through the second motor side aperture portion, a second intake side aperture portion configured to be provided in the other end portion of the second scroll casing portion in the direction of the axis of the second scroll casing portion and to be opened at a side opposite to the motor, a second intake box for an intake of an air being mounted upon the second intake side aperture portion, the second motor side aperture portion and the second intake side aperture portion being disposed along an axis identical to the axis of the blower unit, a holder configured to be mounted upon an outer periphery of the motor, and to be capable of supporting the motor with respect to the unit housing, a first cover member configured to close off the first motor side aperture portion, and a second cover member configured to close off the second motor side aperture portion, both the first cover member and the second cover member being configured to be installed upon the holder. The first scroll casing portion is formed so as to be capable of being detachable from and mountable upon the unit housing along the direction of the motor.

### BRIEF DESCRIPTION OF THE DRAWINGS

FIG. 1 is an exploded perspective view showing an element portion of an air conditioning apparatus for use in a vehicle according to an embodiment of the present invention.
FIG. 2 is an exploded perspective view showing the air conditioning apparatus for use in the vehicle according to the embodiment.
FIG. 3 is an elevation cutaway view showing an intake portion of the air conditioning apparatus for use in the vehicle according to the embodiment.
FIG. 4 is an exploded perspective view showing an element portion of the air conditioning apparatus for use in the vehicle according to the embodiment.
FIG. 5 is an elevation view showing a blower unit of the air conditioning apparatus for use in the vehicle according to the embodiment in a state of being viewed from a left hand direction of the vehicle.
FIG. 6 is an elevation view showing the intake portion of the air conditioning apparatus for use in the vehicle according to the embodiment in a state of being viewed from a right hand direction of the vehicle.
FIG. 7 is a perspective view showing a lock structure portion of the air conditioning apparatus for use in the vehicle according to the embodiment.
FIG. 8 is an elevation cutaway view showing a first scroll casing portion of the air conditioning apparatus for use in the vehicle according to the embodiment.
FIG. 9 is an elevation view showing the air conditioning apparatus for use in the vehicle according to the embodiment in a state of being viewed from the right hand direction of the vehicle.
FIG. 10 is a perspective view showing a tool for use in replacement that is employed with the air conditioning apparatus for use in the vehicle according to the embodiment in a state wherein the tool for use in replacement thereof is in use thereupon.
FIG. 11 is a perspective view showing a sequence of an operation of a replacement of the air conditioning apparatus for use in the vehicle according to the embodiment, in a state wherein a first intake box has been extracted therefrom.
FIG. 12 is a perspective view showing the sequence of the operation of the replacement of the air conditioning apparatus for use in the vehicle according to the embodiment, in a state wherein the tool for use in replacement has been inserted upon the first scroll casing portion thereof.
FIG. 13 is a perspective view showing the sequence of the operation of the replacement of the air conditioning apparatus for use in the vehicle according to the embodiment, in a state wherein the first scroll casing portion has been extracted therefrom.
FIG. 14 is a perspective view showing the sequence of the operation of the replacement of the air conditioning apparatus for use in the vehicle according to the embodiment, in the state wherein the first scroll casing portion has been extracted therefrom.
FIG. 15 is a perspective view showing the sequence of the operation of the replacement of the air conditioning apparatus for use in the vehicle according to the embodiment, in a state wherein the blower unit has been extracted therefrom.

### DETAILED DESCRIPTION OF THE PREFERRED EMBODIMENTS

Preferred embodiments of the present invention will be described in detail hereinafter, with reference to the accompanying drawings.

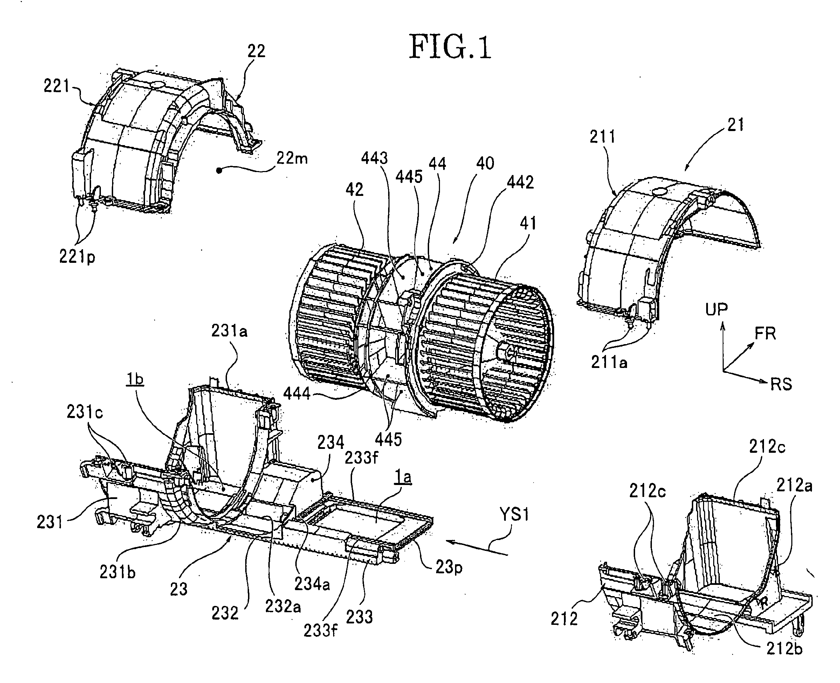

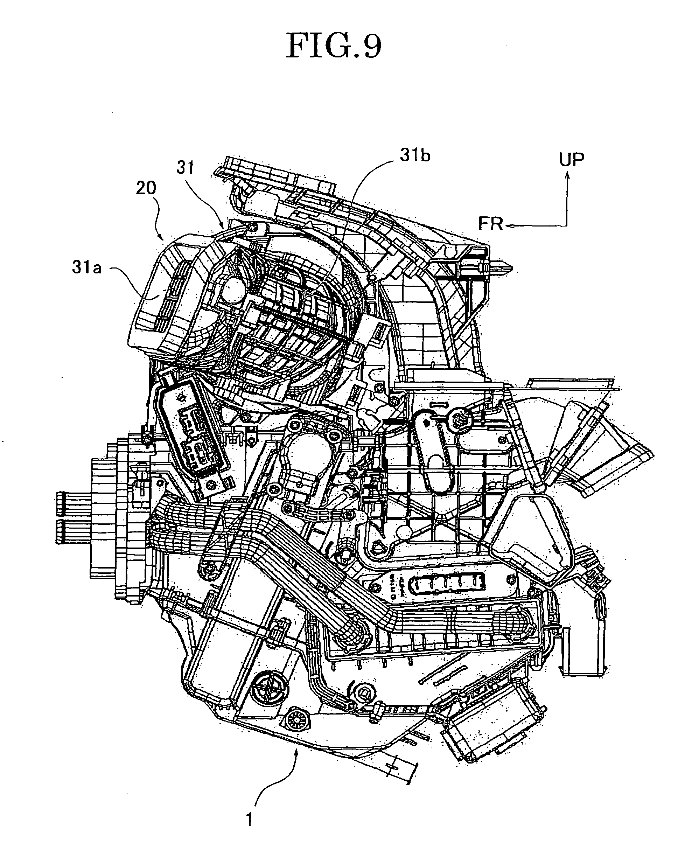

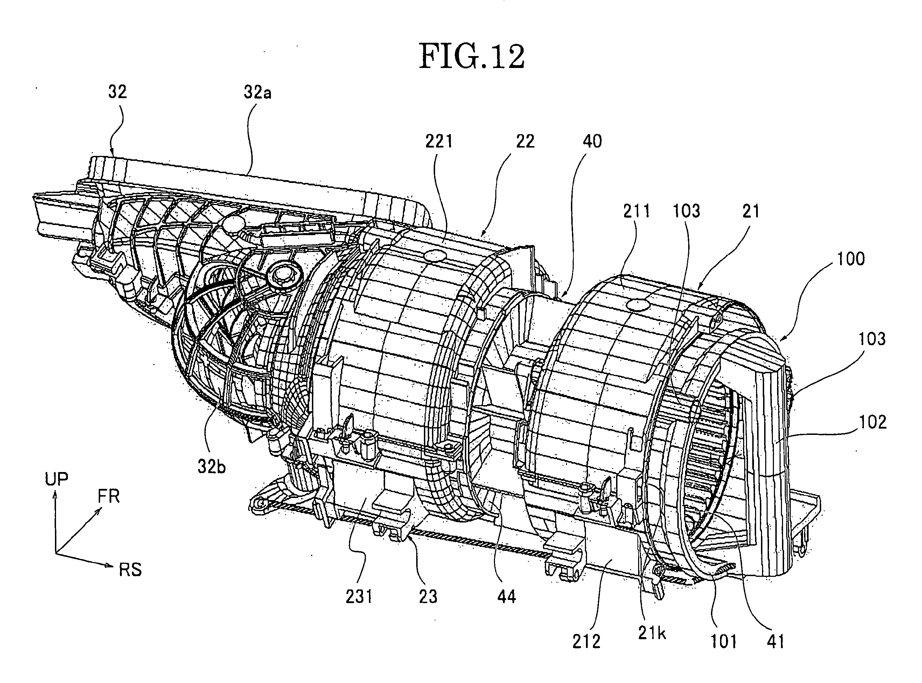

FIG. 1 to FIG. 15 illustrate an air conditioning apparatus for use in a vehicle A, according to an embodiment of the present invention.

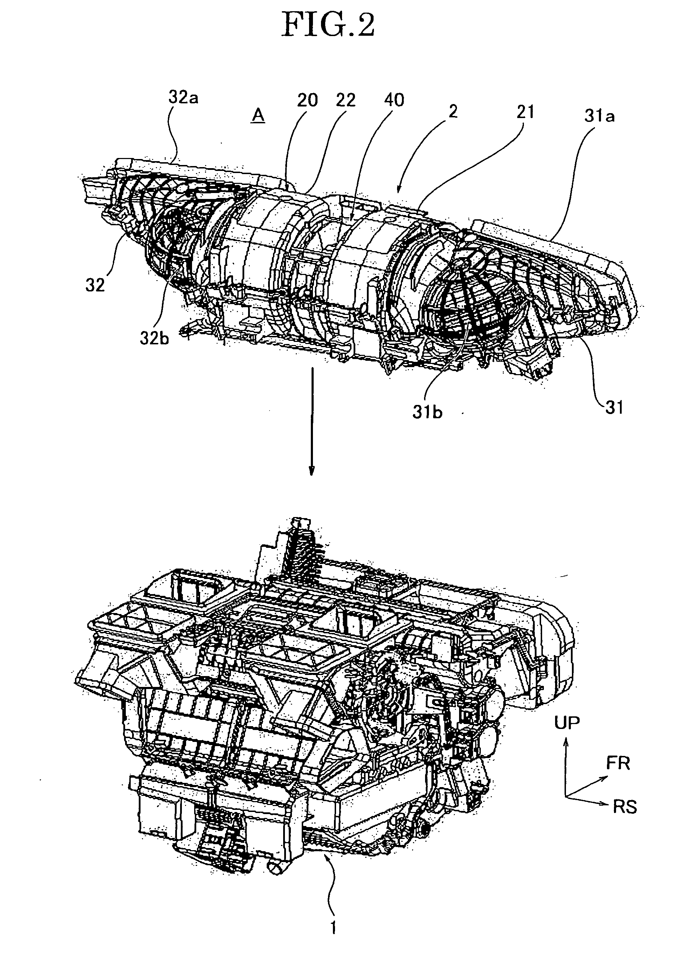

FIG. 2 conceptually illustrates a configuration of the air conditioning apparatus for use in the vehicle A. The air conditioning apparatus for use in the vehicle A includes a unit housing 1 and an intake portion 2.

The unit housing 1, as an instance thereof, is formed in a box shape, from such as a resin, and an interior of the unit housing 1 includes a wind flow path that terminates in a defroster outlet, a foot outlet, and a vent outlet (not shown in an intake port 1a and 1b that is opened upon an upper portion of the unit housing 1; refer to FIG. 1 for particulars). The wind flow path (not shown) upon the interior of the unit housing 1 comprises such as a cooling device (not shown) or a heating device (not shown), and is configured so as to be capable of adjusting a temperature of the wind flow thereupon, as well as to be capable of switching the discharge port of the wind flow thereupon.

It is to be understood that the air conditioning apparatus for use in the vehicle A is installed upon a rear side of an instrument panel of a vehicle (not shown), and in each respective drawing herein, an arrow RS, an arrow UP, and an arrow FR denote a state of the installation of the air conditioning apparatus for use in the vehicle A upon the vehicle, respectively signifying a right hand direction of the vehicle, an upper portion of the vehicle, and a frontal portion of the vehicle.

The intake portion 2 includes a scroll casing 20, a first intake box 31, a second intake box 32, and a blower unit 40.

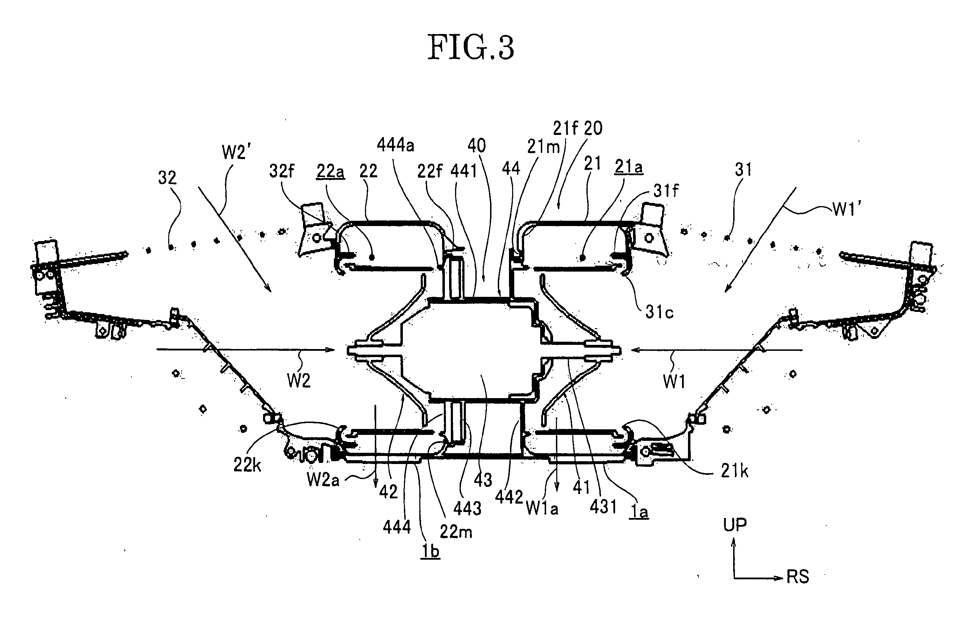

The blower unit 40 comprises a first fan 41, a second fan 42, a motor 43 (refer to FIG. 3 for particulars) and a holder 44, such as is depicted in FIG. 1.

The motor 43 includes a drive axle 431, which penetrates both sides of the motor 43 at a location along a direction of an axis of the motor 43, and a first fan 41 and a second fan 42 are attached upon the drive axle 431. Accordingly, both of the fans 41 and 42 rotate in a unified manner in response to being thus driven by the motor 43.

The first fan 41 and the second fan 42 are what is commonly referred to as a sirocco type of fan, which draws in air, by rotating, along the direction of the axis thereof, and discharges the air thus drawn in along a direction of an outer diameter thereof, and both the first fan 41 and the second fan 42 are formed so as to comprise an identical diameter to one another.

The holder 44 comprises a function of holding the motor 43 upon the scroll casing 20. According to the embodiment, the holder 44 is formed from a resin cast mold in an approximately cylindrical shape, and includes a main body portion 441, a first flange portion for a cover, i.e., a first cover member, 442, a second flange portion for a cover, i.e., a second cover member, 443, a flange portion for a tight fitting 444, and a reinforcing plate 445, such as is shown in FIG. 3.

The main body portion 441 is a cylindrical material that forms an inner periphery of the holder 44. The motor 43 is injected into the inner periphery of the holder 44.

The first flange portion for the cover 442 is penetrated in an approximately circular plate shape along a direction of an outer diameter of an outer periphery of an end portion along a direction of an axis of the main body portion 441, including a right hand end portion thereof according to the embodiment.

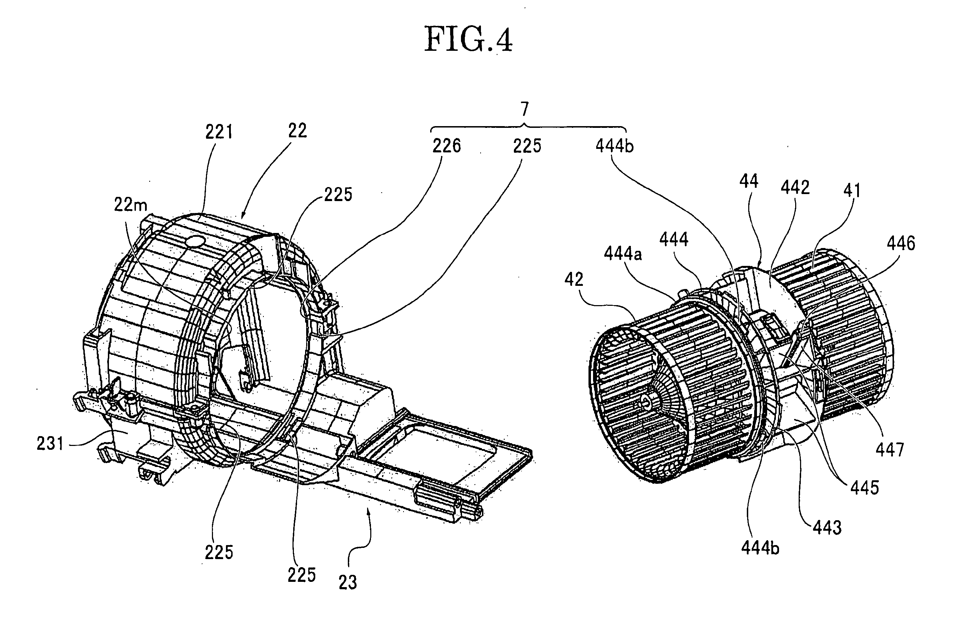

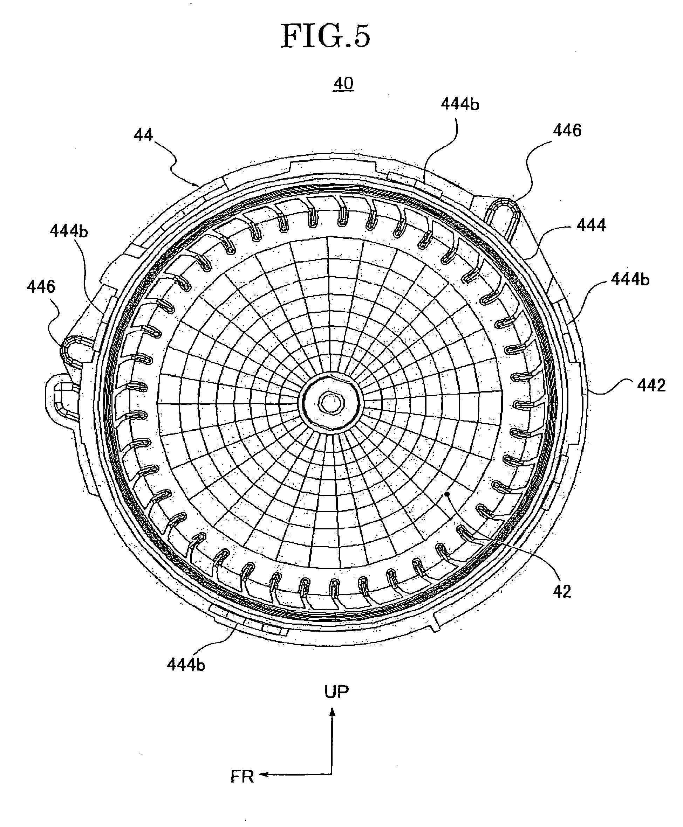

A reception portion of a fastening material 446 is formed at two locations upon the outer periphery of the first flange portion for the cover 442, by protruding even further along the direction of the outer diameter than the outer periphery of the first flange portion for the cover 442, such as is depicted in FIG. 4 and FIG. 5. It is to be understood that it would be possible to treat the fastening material described herein as a screw, as an instance thereof, and, accordingly, the reception portion will be referred to hereinafter as a screw reception portion 446 according to the embodiment.

The screw reception portion 446 is formed upon a leading end of a post portion 447, as an integrated whole thereupon, whereas the post portion 447 is in turn formed as an integrated whole with the first flange portion for the cover 442, such as is depicted in FIG. 4, and a screw hole (not shown) is formed thereupon wherein a fastening material, such as a screw 71 and 72, as an instance thereof, is fastened from an end surface of a right hand direction of a vehicle to a left hand direction thereof. It is to be understood that the two screw reception portions 446 and 446 respectively are positioned upon a common circumference shape including a slightly larger diameter than the outer diameter of the first fan 41.

The second flange portion for the cover 443 and the flange portion for the tight fitting 444 are arranged in a row, protruding into an approximately circular plate shape upon the direction of the outer diameter of the outer periphery of another end of the main body portion 441 along the direction of the axis thereof, comprising a left hand end portion thereof according to the embodiment. The flange portion for the tight fitting 444 is formed so as to comprise a narrower diameter than a diameter of the second flange portion for the cover 443, and the second flange portion for the cover 443 is formed so as to comprise approximately the same diameter as a diameter of the first flange portion for the cover 442, such as is depicted in FIG. 3.

In addition, an inserted cylinder portion 444a is configured to protrude, along the direction of the axis, at a location that is further within the side of the inner diameter than an edge of the outer periphery end of the flange portion for the tight fitting 444.

Furthermore, a hook 444b is formed upon four locations along a direction of a periphery upon the outer periphery of the flange portion for the tight fitting 444, such as is depicted in FIG. 5. The four hooks 444b are tightly fitted together with a second scroll casing portion 22 of the scroll casing 20 (to be described hereinafter), and are configured to protrude along the direction of the outer diameter of the flange portion for the tight fitting 444, from the outer periphery thereof.

It is to be understood that the reinforcing plate 445 is emplaced in an extended manner along the direction of the axis in a linkage with the first flange portion for the cover 442 and the second flange portion for the cover 443, and is also positioned at an approximately constant interval along the direction of the periphery thereupon.

The scroll casing 20 includes the first scroll casing portion 21, which forms a first scroll chamber 21a, and the second scroll casing portion 22, which forms a second scroll chamber 22a, such as is shown in FIG. 3.

It is to be understood that the first scroll chamber 21a houses the first fan 41, and the wind flow that is drawn in along the direction of the axis of the motor and along a direction at an angle to the axis of the motor from the first intake box 31, such as is denoted by an arrow W1, i.e., an interior air intake, and an arrow W1', i.e., an exterior air intake, is formed in a scroll shape that directs the wind flow toward the intake port 1a of the unit housing 1, such as is denoted by an arrow W1a.

In a similar manner, the second scroll chamber 22a houses the second fan 42, and the wind flow that is drawn in along the direction of the axis of the motor from the second intake box 32, such as is denoted by an arrow W2, is formed in a scroll shape that directs the wind flow toward the intake port 1b of the unit housing 1, such as is denoted by an arrow W2a.

The scroll casing 20 is made of a resin, and includes a base 23, a first scroll casing upper portion 211, a first scroll casing lower portion 212, and a second scroll casing upper portion 221, such as is depicted in FIG. 1.

The base 23 forms a lower portion of the scroll casing 20, and is coupled to the unit housing 1.

Put another way, a pair of the intake ports 1a and 1b are opened upon the base 23, and the intake ports 1a and 1b are anchored upon an upper portion of the unit housing 1, in a state of being caused to communicate within an interior portion of the unit housing 1. It is to be understood that the anchoring thereof is accomplished by inserting a pin 23p, which is caused to protrude downward from a plurality of sites upon the base 23 into a reception portion (not shown) of the unit housing 1, and also by fastening the base 23 to the unit housing 1 with a screw (not shown) in a plurality of sites thereupon.

A second scroll casing lower portion 231, a holder maintenance portion 232, and a support framework portion 233 is formed upon the base 23, as depicted in order from left in FIG. 1.

The second scroll casing lower portion 231 is coupled with the second scroll casing upper portion 221 to form the second scroll casing portion 22. Put another way, the second scroll casing lower portion 231 includes a rectangular pipe portion 231a, which is formed in an approximately rectangular pipe shape that forms the intake port 1b, and a curved plate portion 231b, which links with the rectangular pipe portion 231a, and forms a scroll shape thereby. In addition, the second scroll casing upper portion 221 is formed in a curved shape that forms the scroll shape in turn.

Accordingly, the second scroll casing portion 22 is formed by coupling the second scroll casing lower portion 231 with the second scroll casing upper portion 221.

A detailed description of the coupling thereof will be omitted hereinafter. It is to be understood, however, that the coupling thereof is accomplished by tightly fastening a pin 221p, which is caused to protrude downward from a plurality of sites upon the second scroll casing upper portion 221 into a reception portion 231c of the second scroll casing lower portion 231, and furthermore, by fastening the second scroll casing upper portion 221 to the second scroll casing lower portion 231 with a screw (not shown) in a plurality of sites thereupon.

A second intake aperture portion 22k upon a side of the intake or a second intake side aperture portion, which is configured to communicate with the second intake box 32, and a second aperture portion 22m upon a side of the motor or second motor side aperture portion, wherein the second fan 42 is caused to move in and out, are opened upon the second scroll casing portion 22, upon both a left hand and a right hand end portion thereof, along approximately the same axis thereupon, such as is depicted in FIG. 3.

The second aperture portion upon the side of the motor 22m is closed off by the second flange portion for the cover 443 of the holder 44 and the flange portion for the tight fitting 444.

Turning to a description of a structure thereof, an aperture flange 22f is configured to protrude in an approximately cylindrical shape along the direction of the axis upon the outer periphery of the second aperture portion upon the side of the motor 22m. In addition to causing the inserted cylinder portion 444a to be inserted upon an inner periphery of the second aperture portion upon the side of the motor 22m, the flange portion for the tight fitting 444 is brought into a close contact with the inner periphery of the second aperture portion upon the side of the motor 22m, and also, the second flange portion for the cover 443 is brought into close contact with a leading end portion of the aperture flange 22f, and thus, the second aperture portion upon the side of the motor 22m is closed off. In such a manner as is described herein, a tight seal with respect to the second aperture portion upon the side of the motor 22m is achieved by an L-shaped component, comprising the inserted cylinder portion 444a and the flange portion for the tight fitting 444, being brought into a close contact with the second aperture portion upon the side of the motor 22m, and also, by the aperture flange 22f and the second flange portion for the cover 443 being brought into a close contact and closed off in an overlapping layer manner, thereby ensuring a high degree of air-tightness.

Returning to FIG. 1, the holder maintenance portion 232 includes a circular surface 232a, which is capable of making a close contact with an outer periphery of the reinforcing plate 445 of the holder 44.

The support framework portion 233 is formed in a framework shape of an approximately rectangular shape that surrounds the intake port 1a. A vertical partition portion 234 is interposed in a vertical direction between the holder maintenance portion 232 and the support framework portion 233, toward a right hand direction as viewed in FIG. 1.

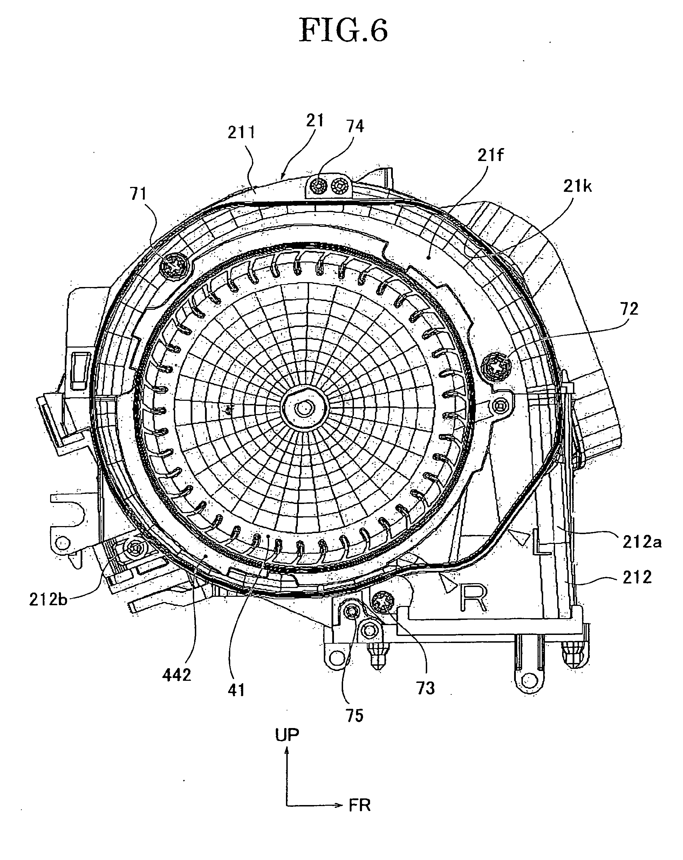

With respect to the vertical partition portion 234, a screw hole 234a is formed upon a left end corner portion thereof as viewed from a direction denoted by an arrow YS1 in FIG. 1. The screw hole 234a is positioned in a circumference shape that is identical to the circumference shape of the screw reception portion 446 that is installed upon the first flange portion for the cover 442 of the holder 44, and is formed so as to be capable of fastening a screw 73 that is depicted in FIG. 6.

The holder 44 is anchored upon the second scroll casing portion 22 by a lock structure portion 7 that is depicted in FIG. 4.

The lock structure portion 7 includes the hook 444b, which is installed upon four sites of the flange portion for the tight fitting 444 of the holder 44, as described elsewhere, and a hollow portion for insertion 225 and a tight fitting depression 226, which is formed upon the second scroll casing upper portion 221 of the second scroll casing portion 22 and the base 23, corresponding to each respective hook 444b thereupon.

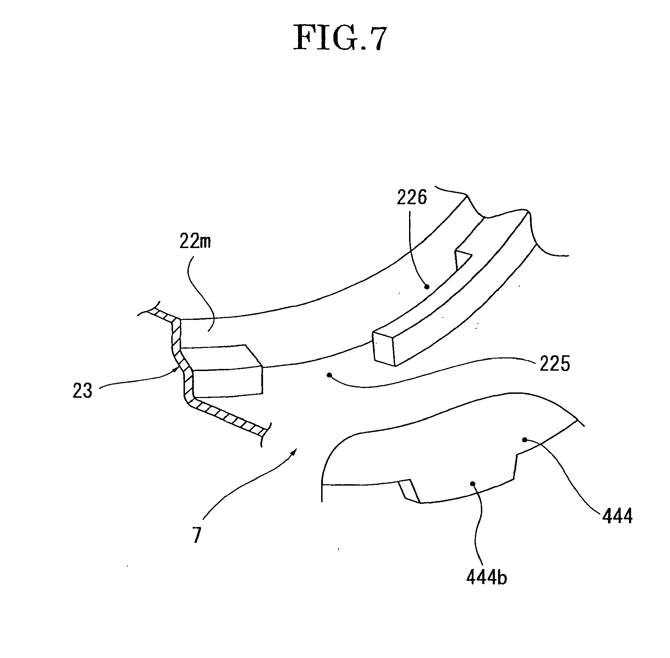

Put another way, the hollow portion for insertion 225, which forms a hollow shape that is capable of moving the hook 444b along the direction of the axis, is formed upon four sites of a circumference of the second aperture portion upon the side of the motor 22m of the second scroll casing portion 22. Thus, FIG. 7 illustrates an enlargement of the four hollow portions for insertion 225 thereof, whereupon the tight fitting depression 226 is formed in the direction of the circumference from an inner recess along the direction of the axis of the hollow portion for insertion 225, in a linkage with the hollow portion for insertion 225 thereof.

Accordingly, presuming that the lock structure portion 7 is in a lock state, the flange portion for the tight fitting 444 of the holder 44 is caused to be inserted upon the inner periphery of the aperture flange 22f of the circumference of the second aperture portion upon the side of the motor 22m of the second scroll casing portion 22, such that the hook 444b is inserted upon the hollow portion for insertion 225 thereupon.

According to the embodiment, rotating the holder 44 in a counterclockwise direction causes the hook 444b to penetrate into the tight fitting depression 226, both the hook 444b and the tight fitting depression 226 enter into a state of being tightly fitted along the direction of the axis, and thus, the holder 44 is anchored upon the second scroll casing portion 22.

In addition, when disengaging the lock of the lock structure portion 7, rotating the holder 44 in a clockwise direction, in a reverse manner to the preceding description, and thereby moving the hook 444b away from the tight fitting depression 226 to a location of the hollow portion for insertion 225, results in a lock disengaged state wherein it is possible for the hook 444b to move along the direction of the axis, i.e., toward the right hand direction of the vehicle.

Returning to FIG. 1, the first scroll casing lower portion 212 and the first scroll casing upper portion 211 form the first scroll casing portion 21, which comprises the first scroll chamber 21a.

The first scroll casing lower portion 212 includes a rectangular pipe portion 212a, which is formed in an approximately rectangular shape, and which is linked with the intake port 1a, and a curved plate portion 212b, which links with the rectangular pipe portion 212a, and forms a scroll shape. In addition, the first scroll casing upper portion 211 is formed in a curved shape that forms the scroll shape in turn.

It is to be understood that coupling the first scroll casing upper portion 211 with the first scroll casing lower portion 212 is accomplished by inserting a plurality of tight fitting pins 211a, which is caused to protrude downward from the first scroll casing upper portion 211 into a reception hole 212c of the first scroll casing lower portion 212, and also by fastening the first scroll casing upper portion 211 to the first scroll casing lower portion 212 with a screw (not shown) in a plurality of sites thereupon.

A first aperture portion 21k upon a first intake side as a first intake side aperture portion, which is configured to communicate with the first intake box 31, and a first aperture portion 21m upon a side of the motor as a first motor side aperture portion, wherein the first fan 41 is caused to move in and out, are opened upon the first scroll casing portion 21, upon both a left hand and a right hand end portion thereof, along approximately the same axis thereupon, such as is depicted in FIG. 3.

It is to be understood that an aperture flange 21f (refer to FIG. 3 for particulars) is formed upon an edge of a periphery of the first aperture portion 21m upon the side of the motor, facing in a direction of an inner diameter thereof, and the first aperture portion 21m upon the side of the motor is formed upon a narrower diameter than the diameter of the first intake side aperture portion 21k.

The first aperture portion 21m upon the side of the motor is closed off by the first flange portion for the cover 442 of the holder 44, such as is depicted in FIG. 3. In addition, the first intake box 31 is mounted upon the first intake side aperture portion 21k.

Furthermore, the first scroll casing lower portion 212 is supported by the support framework portion 233 of the base 23 so as to be capable of sliding along the direction of the axis.

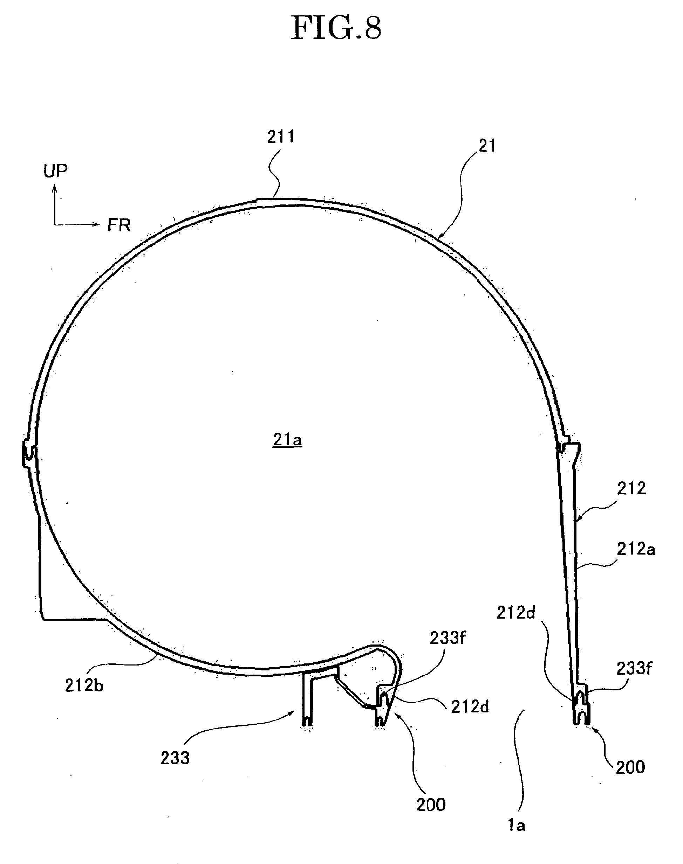

Put another way, a partition flange 233f and 233f, an upper portion whereof has a protrusion shape, is formed upon the support framework portion 233 of the base 23, in a line with a fore and aft edge of the intake port 1a, such as is depicted in FIG. 8.

Conversely, a slide portion 212d, including a pair of partition plates arranged in a row, further including an approximate hollow shape in a cross section thereof, is formed upon a lower end portion of the first scroll casing lower portion 212, such as is depicted in a cross-section diagram in FIG. 8, and a concave-convex fitting structure portion 200 is formed upon the slide portion 212d, so as to loosely fit upon the partition flange 233f from above.

Accordingly, the air flow that is passed through the intake port 1a is prevented from leaking therefrom by the concave-convex fitting structure portion 200, and also, the first scroll casing lower portion 212 and the first scroll casing upper portion 211 that is integrated therewith is supported by the concave-convex fitting structure portion 200 so as to be capable of sliding along the direction of the axis, in a line with the partition flange 233f.

Following is a description of an anchoring structure of the first scroll casing portion 21 upon the side of the unit housing 1 thereof.

The first scroll casing portion 21 is fastened with a screw 71 and 72 upon two sites of the screw reception portion 446 of the holder 44, and is fastened with a screw 73 upon one site of the screw hole 234a of the base 23.

Put another way, the aperture flange 21f of the first scroll casing upper portion 211 is positioned so as to overlap with the screw reception portion 446 along the direction of the axis, and is fastened upon the screw reception portion 446 (not shown in FIG. 6) at two sites by the screw 71 and 72 that are depicted in FIG. 6. It is to be understood that a location of the fastening thereof is set so as to be further in the direction of the inner diameter of the first intake side aperture portion 21k than the edge of the inner periphery thereof, as well as further in the direction of the outer periphery of the first fan 41 than the outer periphery thereof, and is positioned in a proximity to the first intake side aperture portion 21k, such as is depicted in FIG. 6.

Conversely, the first scroll casing lower portion 212 is upon an exterior side of the rectangular pipe portion 212a, and a corner portion upon a lower side of the curved plate portion 212b is fastened upon the screw hole 234a (not shown in FIG. 6) of the base 23 with the screw 73.

Thus, the first scroll casing portion 21 is anchored upon the base 23 with both the holder 44 and the screw 73, and in addition, the holder 44 is anchored upon both the base 23 and the second scroll casing portion 22, the second scroll casing portion 22 is formed in an integrated manner with the base 23, and the base 23 is anchored upon the unit housing 1. Given such a relationship as is described herein, the first scroll casing portion 21, the second scroll casing portion 22 and the holder 44 are anchored with respect to the unit housing 1.

The first intake box 31 and the second intake box 32 respectively include an external air intake port 31a and 32a, and an internal air intake port 31b and 32b, and are formed so as to be capable of drawing in both the external air and the internal air. It is to be understood that an intake door (not shown), which switches between the interior air and the exterior air, is installed upon an interior portion of each respective intake box.

The first intake box 31 is fastened with respect to the unit housing 1 at two sites by way of the screw 74 and 75 (refer to FIG. 6 for details), in a state wherein an aperture portion 31c, which is formed upon an inner periphery of a flange portion 31f that is installed upon an edge of the first intake box 31 along the direction of the axis, is caused to be inserted into the first intake side aperture portion 21k of the first scroll casing portion 21, in a state of communication with the first scroll casing portion 21 thereupon, such as is depicted in FIG. 3.

It is to be understood that the fastening site thereupon is a site that is presented upon a right hand surface of the unit housing 1, such as is depicted in FIG. 6, and is fastened in a state wherein the screw 74 and 75 are faced in the direction along the axis.

In addition, the second intake box 32 is also fastened to the unit housing 1 by two screws (not shown), in a manner similar to the first intake box 31.

In addition, the flange portions 31f and 32f are formed in a shape of an approximate U-shaped cross section, and a leading end portion of each respective fan 41 and 42 is inserted into a hollow shaped portion of the flange portions 31f and 32f, thereby preventing a leakage of the air flow that is drawn in from each respective intake box 31 and 32, such as is depicted in FIG. 3.

Following is a description of an effect according to the embodiment.

### Procedure for Imposition

The description commences with a procedure for an imposition of the intake portion 2 upon the unit housing 1.

It is to be understood that prior to executing the operation of the imposition thereupon, the blower unit 40 will first be assembled, as will the first scroll casing portion 21.

Put another way, the motor 43 is injected into the inner diameter of the main body portion 441 of the holder 44, and furthermore, the first fan 41 and the second fan 42 are mounted upon both end portions of the drive axle 431 of the motor 43, thereby being assembled as the blower unit 40.

In addition, the first scroll casing upper portion 211 and the first scroll casing lower portion 212 are coupled, thereby assembling the first scroll casing portion 21. In such a circumstance, the tight fitting pins 211a, which protrude from the first scroll casing upper portion 211 in the downward direction, are inserted into the reception hole 212c of the first scroll casing lower portion 212, a determination of a position of both the first scroll casing upper portion 211 and the first scroll casing lower portion 212 is performed, and the first scroll casing upper portion 211 and the first scroll casing lower portion 212 are coupled by being fastened together in such a state with a screw (not shown).

Thereupon, an operation of anchoring the base is first performed.

Put another way, the base 23 is anchored upon an upper portion of the unit housing 1. In such a circumstance, the pins 23p, which protrude from the base 23 from a plurality of sites thereupon in the downward direction, are inserted into a reception portion (not shown) of the unit housing 1, and also, the base 23 is fastened to the unit housing 1 at a plurality of sites by the screws (not shown).

Thereafter, an operation of assembling the second scroll casing portion is performed.

Put another way, the second scroll casing upper portion 221 is anchored upon the second scroll casing lower portion 231, thereby assembling the second scroll casing portion 22. In such a circumstance, subsequent to tightly fastening the plurality of pins 221p, which protrude in the downward direction from the second scroll casing upper portion 221, into the reception portion 231c that is formed upon the second scroll casing lower portion 231, and performing a determination of a location thereupon, the second scroll casing upper portion 221 and the second scroll casing lower portion 231 are anchored by being fastened together by the plurality of screws (not shown).

Thereafter, an operation of an imposition of the second intake box and a work of an imposition of the blower unit is performed.

Whereas it would be permissible to perform either the imposition of the second intake box 32 or the imposition of the blower unit 40 first in such a circumstance, it is presumed according to the embodiment that the imposition of the second intake box 32 will be performed first.

When performing the imposition of the second intake box 32, the flange portion 32f thereof is inserted into the second intake a side aperture portion 22k of the second scroll casing portion 22, a determination of a location thereupon is performed with respect to the unit housing 1 and the second scroll casing portion 22, and thereafter, the second intake box 32 is fastened thereupon with the screws (not shown) at two sites, as seen from the left hand direction in FIG. 2.

When performing the imposition of the blower unit 40, the second fan 42 is inserted from the second aperture portion 22m upon the side of the motor of the second scroll casing portion 22 along the direction of the axis, and a leading end of the second fan 42 is inserted into the hollow shape portion of the flange portion 32f of the second intake box 32.

In such a circumstance, it would be permissible for the second fan 42 to be made to pass solely through the second aperture portion 22m upon the side of the motor, and a distance whereupon the second fan 42 must be moved along the direction of the axis in order to avoid an interference between the second fan 42 and the second aperture portion 22m upon the side of the motor is on the order of the dimension of the second fan 42 along the direction of the axis thereupon.

In the present circumstance, the four hooks 444b, which protrude in the direction of the outer diameter from the flange portion for the tight fitting 444 of the holder 44, such as is depicted in FIG. 4, are moved along the direction of the axis in a line with the four hollow portions for insertion 225, which are formed upon the edge portion of the outer periphery of the second aperture portion 22m upon the side of the motor of the second scroll casing portion 22.

When the movement thereof along the direction of the axis is completed, the holder 44 is next rotated in the counterclockwise direction. Each respective hook 444b is thereby moved from the hollow portion for insertion 225 to the tight fitting depression 226, the movement of the holder 44 is thus restricted to a movement toward the second scroll casing portion 22 along the direction of the axis, and also, the holder 44 is anchored upon the unit housing 1 in a state wherein the holder 44 is brought into the close contact with the holder maintenance portion 232 by a weight of the holder 44 thereupon.

Thereafter, an operation of an imposition of the first scroll casing portion is performed.

Put another way, the previously assembled first scroll casing portion 21 is imposed upon the base 23 and the holder 44.

In such a circumstance, the operation of the imposition commences with the slide portion 212d of the first scroll casing portion 21 being slid in a line with the partition flange 233f of the support framework portion 233 of the base 23, the edge of the circumference of the first aperture portion 21m upon the side of the motor is caused to protrude upon the first flange portion for the cover 442 of the holder 44, and it is presumed that the first aperture portion 21m upon the side of the motor is in the state of being closed over by the first flange portion for the cover 442.

Whereas, when the operation described herein is performed, it will be necessary to move the first scroll casing portion 21 along the direction of the axis so as to avoid the interference between the first scroll casing portion 21, the first aperture portion 21m upon the side of the motor, and the first fan 41, the distance of the movement thereof is a length that corresponds to an axial length of the first fan 41, and also, the slide thereupon is guided by the partition flange 233f, thereby retarding the generation of the interference thereof.

Thereafter, the upper portion of the first scroll casing portion 21 is fastened at two sites to the screw reception portion 446 of the first flange portion for the cover 442 of the holder 44 with the screw 71 and 72, as depicted in FIG. 6, and the lower portion of the first scroll casing portion 21 is fastened at one site to the screw hole 234a of the vertical partition portion 234 of the base 23 with the screw 73, as depicted in FIG. 6, thereby anchoring the first scroll casing portion 21 with respect to the unit housing 1.

A tool for use in replacement 100 according to the present invention is employed in the operation of fastening with the screw 71 and 72.

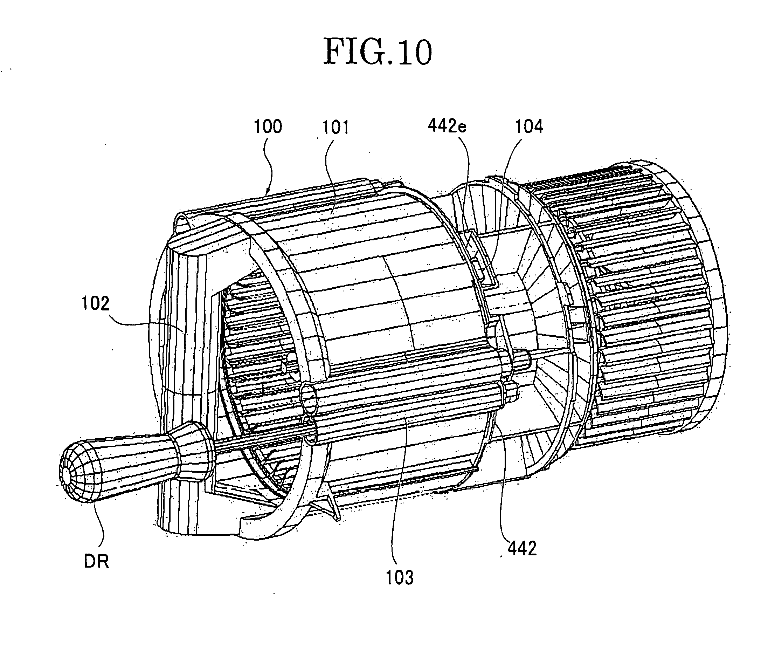

The tool for use in replacement 100 comprises a cylindrical portion 101 and a grip portion 102, such as is depicted in FIG. 10.

The cylindrical portion 101 is formed in a cylindrical shape, further comprising an inner diameter and an outer diameter that are capable of being interposed between both fans 41 and 42 and the first intake side aperture portion 21k. A cylinder for operation, i.e., a guide portion, 103, further comprising a hole whereupon a screwdriver dR, which fastens the screws 71 and 72 upon two sites of a direction of a periphery of the cylindrical portion 101 (refer to FIG. 10 for particulars), is capable of being passed through, is formed across an entire length thereof along the direction of the axis.

The grip portion 102 is caused to bridge one end of the cylindrical portion 101, passing through an axis thereof in a direction that is orthogonal to the axis, and is formed such that an outside diameter thereof comprises a cylindrical shape that may easily be gripped by an operator.

Furthermore, a plurality of tight fitting protrusions 104, which are inserted into a hollow portion for a tight fit 442e, which in turn are formed in a plurality upon the outer periphery portion of the first flange portion for the cover 442 of the holder 44, and wherein the plurality of tight fitting protrusions 104 fit tightly into the plurality of hollow portions for the tight fit 442e, are formed upon a leading end of the cylindrical portion 101.

The tool for use in replacement 100 is inserted upon the outer periphery of the first fan 41 from the first intake side aperture portion 21k of the first scroll casing portion 21, and the location of both of the cylinders for work 103 are adjusted along the direction of the periphery so as to overlap with the screw reception portion 446 along the direction of the axis. Thereafter, the screwdriver dR is inserted in sequence into the screw 71 (72), the screw 71 (72) is fastened upon the screw reception portion 446, and the first scroll casing upper portion 211 is thus coupled with the holder 44.

It is to be understood that a screw holding cylinder (not shown), further comprising an inner diameter that is capable of holding the screw 71 and 72, is employed according to the embodiment when fastening the screw 71 and 72. In a state wherein the screw 71 (72) is held at a leading end of the screw holding cylinder, the screw holding cylinder is inserted into a hole of the cylinder for work 103, and the screw 71 (72) is positioned upon a location of the screw reception portion 446. Thereafter, the screwdriver dR is inserted therein, and the fastening of the screw 71 (72) is performed thereupon.

Conversely, the fastening of the screw 73 (not shown) employs the screw holding cylinder to insert the screw holding portion that holds the screw 73 toward the screw hole 234a from a lower side of the first scroll casing lower portion 212, and thereafter, the screwdriver dR is inserted into the screw hole 234a, and the fastening performed thereupon, as per the preceding description. The first scroll casing lower portion 212 is thus coupled upon the vertical partition portion 234 of the base 23.

Thereafter, the operation of imposition of the first intake box is performed.

Put another way, the first intake box 31 is mounted upon the first intake aperture portion 21k upon the intake side of the first scroll casing portion 21, and the first intake box 31 is fastened upon the unit housing 1 with the screws 74 and 75. It is to be understood that the operation of imposition thereof is identical to the operation of imposition of the second intake box 32, and thus, a detailed description thereof will be omitted herein.

The intake portion 2 is imposed in the state depicted in FIG. 2 by way of the process described herein.

### When Replacing the Blower Unit 40

If a fault occurs with the blower unit 40, it is possible, according to the embodiment, to replace the blower unit 40 without having to extract the air conditioning apparatus for use in the vehicle A from the vehicle chassis. A procedure for doing so will be described hereinafter, with reference to the attached drawings.

The procedure commences with an operation of extracting the first intake box.

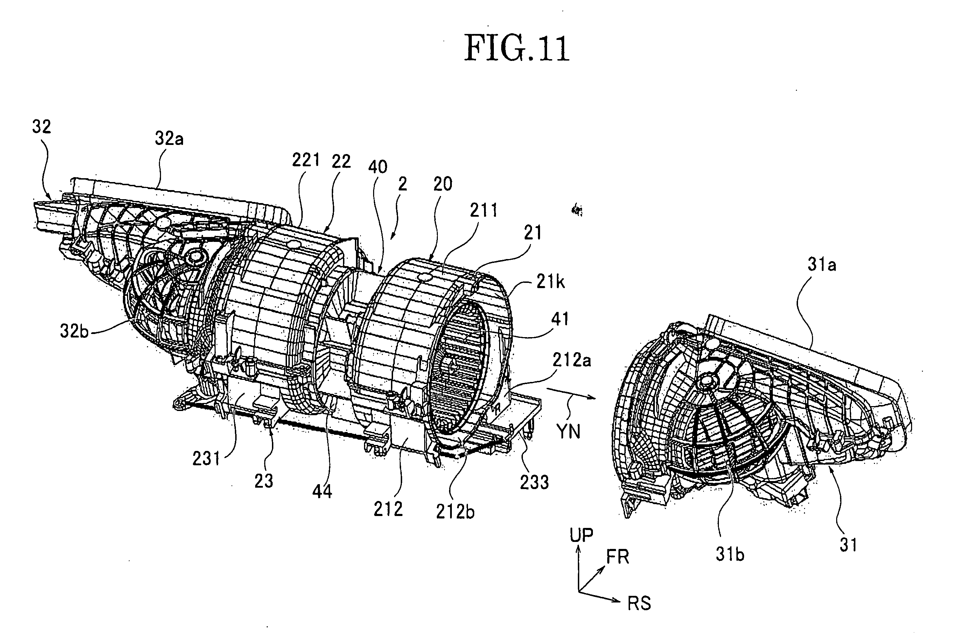

Put another way, the first intake box 31 is extracted, such as is depicted in FIG. 11, from the intake portion, which is in a state that is depicted in FIG. 2.

In such a circumstance, the screwdriver dR is inserted from a right hand side of the air conditioning apparatus for use in the vehicle A, toward the screws 74 and 75, along the direction of the axis, the screws 74 and 75 are thereby removed, the coupling of the first intake box 31 and the unit housing 1 is thereby disengaged, and the first intake box 31 is moved along the direction of the axis, i.e., in a direction of an arrow YN.

The first intake side aperture portion 21k of the first scroll casing portion 21 is thus rendered into an open aperture state.

An operation of inserting an imposition tool is performed thereafter.

Put another way, the tool for use in replacement 100, which is depicted in FIG. 10, is inserted, from the first intake side aperture portion 21k of the first scroll casing portion 21, between the first fan 41 and the first scroll casing portion 21, such as is depicted in FIG. 11. In such a state, the tool for use in replacement 100 is rotated in the direction of the periphery as necessary, such that the cylinder for work 103 is positioned along the same axis as the two screws 71 and 72 that are depicted in FIG. 6.

Thereafter, an operation of disengaging the combining of the first scroll casing portion is performed.

Put another way, the screwdriver dR is inserted into the cylinder for work 103 of the tool for use in replacement 100, in a state of penetrating into the holding cylinder, and is mounted upon a head of the screws 71 and 72 of a leading end portion of the cylinder for work 103. Thereafter, the screwdriver dR is rotated and the screws 71 and 72 are loosened. Thus loosened, the screws 71 and 72 enter into a state of being held within the holding cylinder.

Thereafter, the tool for use in replacement 100 is withdrawn from the first scroll casing portion 21, with the holding cylinder in the state of imposition thereof.

Furthermore, the holding cylinder (not shown) is mounted upon the head of the screw 73, after passing through a lower side of the curved plate portion 212b of the first scroll casing lower portion 212, and furthermore, the screwdriver dR is inserted into the holding cylinder, with the screw 73 loosened thereby.

The coupling of the first scroll casing portion 21, the holder 44, and the base 23 is thereby disengaged.

Thereafter, an operation of extracting the first scroll casing portion is performed.

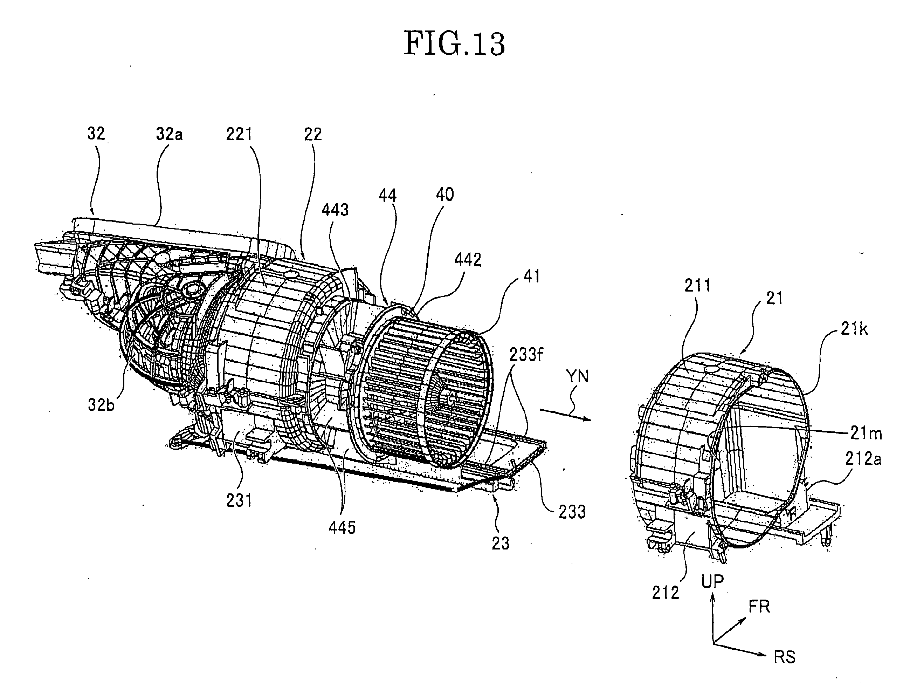

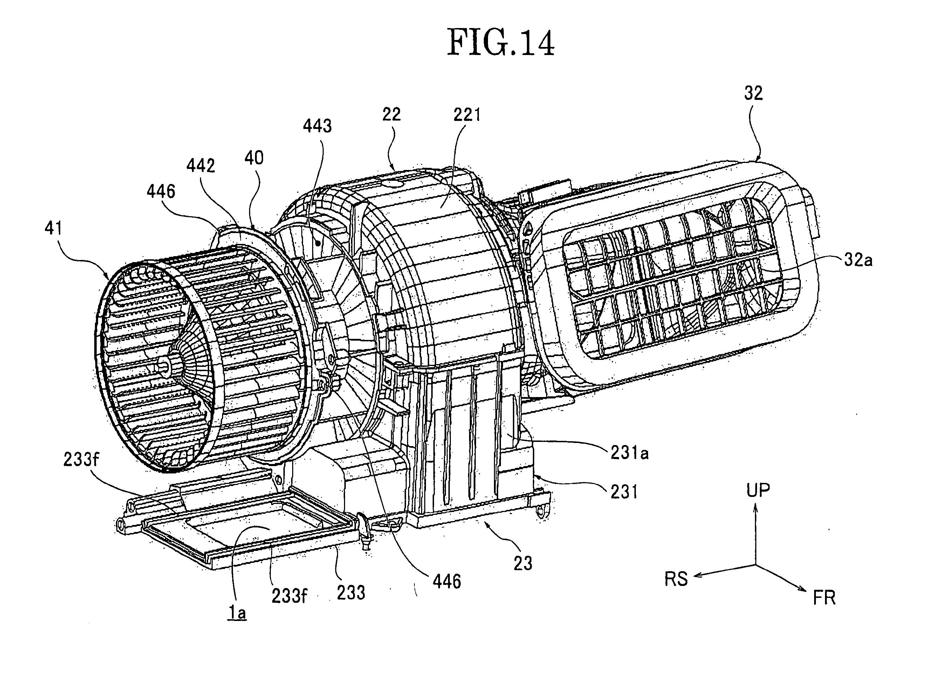

Put another way, the first scroll casing portion 21 is slid in a line with the partition flange 233f, which is formed upon the support framework portion 233, along the direction of the axis, i.e., in a direction of an arrow YN, and extracted from the unit housing 1, such as is depicted in FIG. 13. A state thereof wherein the first scroll casing portion 21 has been extracted is also depicted in FIG. 14.

A distance of the movement of the first scroll casing portion 21 along the direction of the axis in the present circumstance is a length that corresponds to an axial length of the first fan 41, which may be satisfied with a shorter distance than the total length of the blower unit 40, thereby simplifying securing an operating space in a confining environment behind the instrument panel (not shown).

In such a circumstance, while it is necessary that the first fan 41 and the first aperture portion upon the side of the motor 21m are not moved relative to one another in the direction that is orthogonal to the axis in order to avoid the interference therebetween, the distance of the movement thereupon is small, and thus, a superior operability thereupon is achieved.

Moreover, the slide of the first scroll casing portion 21 in the present circumstance is guided by the partition flange 233f, and thus, a displacement thereupon into the direction that is orthogonal to the axis is small, impeding the interference from arising between the first scroll casing portion 21 and the first fan 41, thereby achieving the superior operability thereupon in the present regard as well.

Thereafter, an operation of extracting the blower unit is performed.

In such a circumstance, the operation commences with disengaging the coupling of the blower unit 40 and the second scroll casing portion 22.

The tool for use in replacement 100 is once again employed in the operation of disengaging the coupling thereof.

Put another way, the tool for use in replacement 100 is moved along the direction of the axis through the outer periphery of the first fan 41, with respect to the blower unit 40 in a state wherein the first fan 41 is exposed, such as is depicted in FIG. 13 and FIG. 14, and a leading end of the tool for use in replacement 100 is caused to protrude upon the first flange portion for the cover 442 of the holder 44, such as is depicted in FIG. 10.

The cylinder for work 103 is caused to be positioned along the same axis as the axis of the screw reception portion 446 of the first flange portion for the cover 442, and also, the plurality of tight fitting protrusions 104 upon the leading end of the cylindrical portion 101 of the tool for use in replacement 100 is inserted into the plurality of hollow portions for the tight fit 442e of the first flange portion for the cover 442.

Furthermore, a cylinder for holding (not shown), which holds the screw 72, upon the extraction thereof, upon the leading end thereupon, is inserted upon the cylinder for work 103, and furthermore, the screwdriver dR is inserted therein, the screw 72 is fastened upon the screw reception portion 446, and it is presumed that the tool for use in replacement 100 and the holder 44 comprise a coupled state thereof.

When the tool for use in replacement 100 is thus coupled with the holder 44, the grip portion 102 is gripped, the tool for use in replacement 100 and the holder 44 is rotated in the clockwise direction, and the tight fit between the hook 444b of the holder 44 and a tight fitting depression 256 of the second scroll casing portion 22 is thereby disengaged.

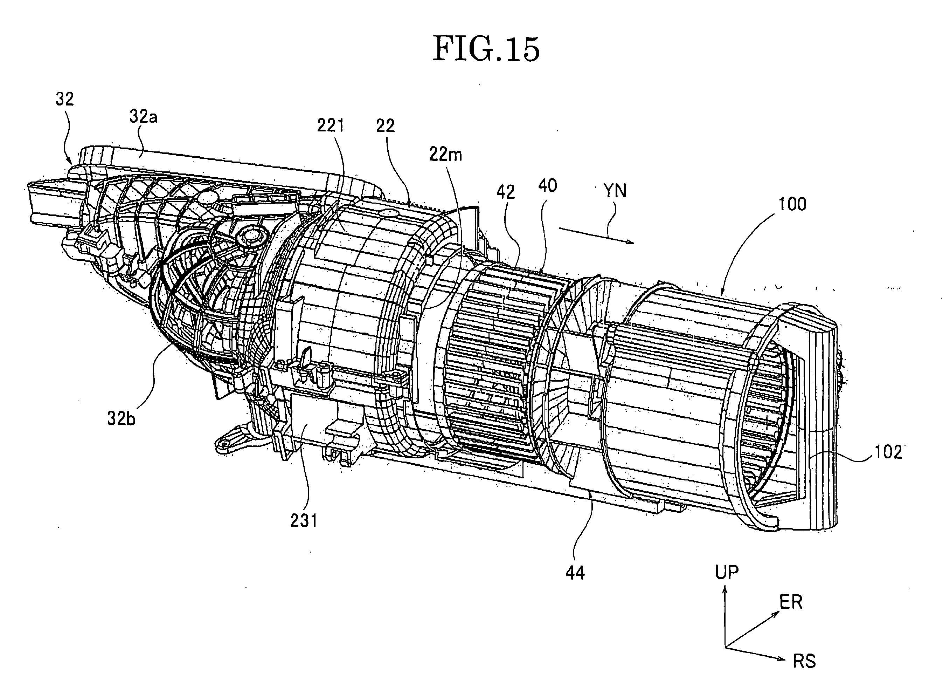

Thereafter, the tool for use in replacement 100 and the blower unit 40 is moved along the direction of the axis, i.e., in the direction of the arrow YN, such as is depicted in FIG. 15.

In the present circumstance, in order that the second fan 42 and the second scroll casing portion 22 are moved relatively along the direction of the axis, such that the second fan 42 is extracted from the second aperture portion upon the side of the motor 22m to the exterior of the second scroll chamber 22a, and to avoid an interference between the second fan 42 and the second aperture portion upon the side of the motor 22m, it is necessary to keep a quantity of displacement of the second scroll casing portion 22, along the direction that is orthogonal to the axis, under control.

A distance whereupon the second scroll casing portion 22 is moved so as to thus keep the quantity of displacement thereof along the direction that is orthogonal to the axis is a distance on the order of a the length of the second fan 42 along the direction of the axis, which may be satisfied with a distance that is shorter than the total length of the blower unit 40, such that when the second fan 42 is moved external to the second scroll chamber 22a, the displacement along the direction that is orthogonal to the axis is tolerated to a certain extent. A superior operability is accordingly derived.

It is to be understood that it would be possible to perform an imposition of a newly replaced blower unit 40 by performing the operation of imposition described herein, and thus, a detailed description thereof will be omitted herein.

An effect as described hereinafter may be obtained according to the embodiment as described herein.
A. It is presumed that it would be possible, with respect to the intake portion 2, to extract the first scroll casing portion 21, which forms the first scroll chamber 21a, with respect to the unit housing 1.
   As a consequence thereof, when extracting the blower unit 40 from the scroll portion, the distance whereupon the first scroll casing portion 21 is moved along the direction of the axis, such that the first fan 41 and the first scroll casing portion 21 do not cause the interference with respect to the blower unit 40, and the distance whereupon the second scroll casing portion 22 is moved along the direction of the axis, such that the second fan 42 and the second scroll casing portion 22 do not cause the interference with respect to the blower unit 40, is made to be shorter than the total length of the blower unit 40, thus achieving a superior operability.
   Moreover, it becomes possible as a result thereof to shorten a dimension of both the first and second aperture portions 21m and 22m upon the side of the motor, whereupon each respective fan 41 and 42 passes, thereby allowing keeping an increase in a size of the scroll casing 20 under control.
   Additionally, it is possible to reduce the space in the vicinity of the scroll portion that is required for the operation thereupon, thus improving the degree of freedom of the design thereof.
B. The first scroll casing portion 21 presumes a structure wherein the concave-convex fitting structure portion 200 of the partition flange 233f and the slide portion 212d of the base 23, which is anchored upon the unit housing 1, is used so as to be supported to be capable of sliding along the direction of the axis.
   As a consequence thereof, it becomes possible to perform the movement of the first scroll casing portion 21 along the direction of the axis smoothly, while keeping the displacement toward the direction that is orthogonal to the axis under control, as well as effecting the prevention of the interference between the first scroll casing portion 21 and the blower unit 40, thereby improving the operability.
   Moreover, the structure that guides such a slide thereupon uses the concave-convex fitting structure portion 200, which prevents the leakage of the wind flow of the intake port 1a, and, as a consequence thereof, it is possible to effect a simplification of the structure compared with installing a new slide structure thereupon. In addition, the simplification of the structure thereupon allows keeping an increase in a size of the air conditioning apparatus for use in the vehicle A under control.
C. With respect to coupling the first scroll casing portion 21 upon the holder 44, the edge of the circumference of the first aperture portion 21m upon the side of the motor of the first scroll casing upper portion 211 is fastened along the direction of the axis with the screws 71 and 72, at the location that approaches the first intake side_aperture portion 21k without the interference arising between the first intake side aperture portion 21k and the first fan 41. As a consequence thereof, extracting the first intake box 31 from the first scroll casing portion 21 facilitates the operation of disengaging the fastening of the screws 71 and 72 from the first intake side aperture portion 21k along the direction of the axis, thereby achieving an operability that is superior to the screw being fastened along the direction that is orthogonal to the axis. In addition, it is possible to directly insert the screwdriver dR toward the screws 71 and 72, thereby achieving a superior operability in such a regard as well.
   Furthermore, it is possible to reduce the space that is required for the operation compared with performing the operation that disengages the fastening upon an exterior portion of the first scroll casing portion 21, thus improving the degree of freedom of the design thereof.
D. The holder 44 has the lock structure portion 7, which causes the hook 444b and the tight fit depression 256 to fit tightly, installed upon the second scroll casing portion 22, and it is presumed that it would be possible both to anchor, and to disengage the anchor thereof, with respect to the second scroll casing portion 22 solely by rotating the holder 44. As a consequence thereof, a superior operability is achieved compared with employing such as the screw to fasten and to disengage the fastening thereupon. In particular, it becomes possible to anchor, and to disengage the anchoring thereof, with the operation at the location that is removed in distance from the lock structure portion 7, thereby achieving a superior operability, and also facilitating reducing the operating space thereupon.
E. The tool for use in replacement 100 is caused to be employed in order to perform the coupling, and the disengagement of the coupling, between the first scroll casing portion 21 and the holder 44. It is thus easy to insert the screwdriver dR from the first intake side aperture portion 21k toward the screws 71 and 72, which are located at a distance removed therefrom along the direction of the axis, and also, it is possible to prevent the interference between the screwdriver dR and the first fan 41 or the first scroll casing portion 21, thereby improving the operability thereupon.
   Moreover, according to the embodiment, the cylinder for holding, which is capable of holding the screw 71 and 72, is inserted upon the cylinder for work 103 of the tool for use in replacement 100, such that the screws 71 and 72 do not fall out when the screws 71 and 72 are fastened, as well as when the fastening of the screws 71 and 72 is disengaged. The operability improves accordingly.
F. The tool for use in replacement 100 is used in the extraction of the blower unit 40, and the blower unit 40 is made capable of being moved along the direction of the axis in a state wherein the tool for use in replacement 100 is coupled with the holder 44, with the blower unit 40 held by the tool for use in replacement 100. Accordingly, it becomes possible to hold the blower unit 40 further forward upon a right hand side of the air conditioning apparatus for use in the vehicle A whereupon the replacement work is being performed than the first fan 41, such that the first fan 41 is not damaged, as an instance thereof, thus simplifying the operation and achieving a superior operability compared with performing the operation while having to reach all the way to the holder 44.

While the present invention has been described with reference to exemplary embodiments and the attached drawings, it is to be understood that the invention is not limited to the disclosed exemplary embodiments. The scope of the following claims is to be accorded the broadest interpretation so as to encompass all such modifications and equivalent structures and functions.

Turning to a description of the present invention in further detail, a structure that presumes that the first scroll casing portion is detachable and mountable with respect to the unit housing 1 is not limited to the structure described according to the embodiment. Whereas an instance is described according to the embodiment wherein the first scroll casing portion 21 is detachable and mountable with respect to the base 23, which forms a portion of the intake portion 2, it would also be permissible, as an instance thereof, to install the first scroll casing portion 21 so as to be capable of being directly detachable from, and mountable upon, the unit housing 1. In such a circumstance, it would be permissible to employ a unit such as a screw fastener to facilitate the first scroll casing portion 21 being detachable and mountable with respect to the unit housing 1 only, and moreover, it would also be permissible to combine the detachment from, and the mounting upon, of the first scroll casing portion 21 with respect to the unit housing 1 with the detachment from, and the mounting upon, of the first scroll casing portion 21 with respect to the holder 44, such as is described according to the embodiment.

In addition, whereas an instance is described according to the embodiment wherein a structure is installed that slide guides the first scroll casing portion 21 it would also be permissible to presume a configuration wherein the slide guide structure thereof is not installed.

In addition, whereas an instance is described according to the embodiment wherein the first scroll casing portion 21 is moved along the direction of the axis when the first scroll casing portion 21 is extracted with respect to the unit housing 1, it would also be permissible, as an instance thereof, to further separate and move the first scroll casing upper portion 211 and the second scroll casing lower portion 212.

Although the preferred embodiments of the present invention have been described, it should be understood that the present invention is not limited to these embodiments, various modifications and changes can be made to the embodiments.

## Claims

1. An air conditioning apparatus for use in a vehicle, comprising:
an intake portion (2) configured so as to be installed upon a unit housing (1) configured to house a thermal exchange device, and to draw an air into an inner portion of the unit housing;
a blower unit (40) configured to be installed upon the intake portion, the blower unit comprising a motor (43), a first fan (41) configured to be installed at one side of the motor in a direction of an axis of the motor, and a second fan (42) configured to be installed at the other side of the motor in the direction of the axis of the motor;
a first scroll casing portion (21) configured to be installed upon the intake portion and to form a first scroll chamber (21a) configured to house the first fan and to direct a wind flow toward the unit housing;
a second scroll casing portion (22) disposed upon a common axis with the first scroll casing portion so as to sandwich the motor between the first and second scroll casing portions and to form a second scroll chamber (22a) configured to house the second fan and to direct a wind flow toward the unit housing;
a first motor side aperture portion (21m) configured to be provided in one end portion of the first scroll casing portion in a direction of an axis of the first scroll casing portion and to be opened at a side of the motor at an internal diameter to be capable of passing the first fan through the first motor side aperture portion;
a first intake side aperture portion (21k) configured to be provided in the other end portion of the first scroll casing portion in the direction of the axis of the first scroll casing portion and to be opened at a side opposite to the motor, a first intake box (31) for an intake of an air being mounted upon the first intake side aperture portion, the first motor side aperture portion and the first intake side aperture portion being disposed along an axis identical to an axis of the blower unit;
a second motor side aperture portion (22m) configured to be provided in one end portion of the second scroll casing portion in a direction of an axis of the second scroll casing portion and to be opened at a side of the motor at an internal diameter to be capable of passing the second fan through the second motor side aperture portion;
a second intake side aperture portion (22k) configured to be provided in the other end portion of the second scroll casing portion in the direction of the axis of the second scroll casing portion and to be opened at a side opposite to the motor, a second intake box (32) for an intake of an air being mounted upon the second intake side aperture portion, the second motor side aperture portion and the second intake side aperture portion being disposed along an axis identical to the axis of the blower unit;
a holder (44) configured to be mounted upon an outer periphery of the motor, and to be capable of supporting the motor with respect to the unit housing;
a first cover member (442) configured to close off the first motor side aperture portion; and
a second cover member (443) configured to close off the second motor side aperture portion, both the first cover member and the second cover member being configured to be installed upon the holder,
**Characterized in that**:
the first scroll casing portion (21) is formed so as to be capable of being detachable from and mountable upon the unit housing along the direction of the axis of the motor.

2. The air conditioning apparatus for use in the vehicle according to claim 1, further comprising:
a slide guide configured to guide the first scroll casing portion (21) in moving along the direction of the axis of the first scroll casing portion with respect to the unit housing.

3. The air conditioning apparatus for use in the vehicle according to claim 2, wherein:
the unit housing comprises an intake port configured to draw the wind flow from the first scroll casing portion to an interior of the unit housing;
a concave-convex fitting structure portion (200) configured to be capable of partitioning an interior and an exterior of the intake port in a state where a partition plate disposed at a side of the first scroll casing portion and a partition plate disposed at a side of the unit housing are overlapped internally and externally, is installed between the intake port and the first scroll casing portion; and
the partition plate disposed at the side of the first scroll casing portion and the partition plate disposed at the side of the unit housing of the concave-convex fitting structure portion are installed in an extended manner along the direction of the axis of the first scroll casing portion, and configures the slide guide.

4. The air conditioning apparatus for use in the vehicle according to any of claim 1 to claim 3, wherein:
the first scroll casing portion is fastened, upon an edge of a periphery of the first motor side aperture portion to the first cover member of the holder by way of a fastening material; and
a location of the fastening of the fastening material is positioned upon a location along the direction of the axis of the first scroll casing portion, in opposition to the first intake side aperture portion without overlapping with the first fan.

5. The air conditioning apparatus for use in the vehicle according to any of claim 1 to claim 4, wherein:
a lock mechanism (7) configured to be capable of switching the holder between a locked state and a lock disengaged state by being rotated around the axis of the first scroll casing portion, is installed between the holder and the second scroll casing portion.

6. A tool for use in replacement of a component with respect to the air conditioning apparatus for use in the vehicle according to claim 4, the tool for use in replacement of the component comprising:
a cylindrical portion (101) configured to be capable of being inserted, from the first intake side aperture portion towards an outer circumference of the first fan;
wherein:
a guide portion (103) configured to guide a tool configured to cause the fastening material to rotate from the first intake side aperture portion toward the fastening material, when the cylindrical portion is inserted from the first intake side aperture portion towards the outer circumference of the first fan, is installed upon the cylindrical portion.

7. A method for extracting a component with respect to the air conditioning apparatus for use in the vehicle according to any of claim 1 to claim 5, comprising the steps of:
extracting the first scroll casing portion from the unit housing, moving the first fan along the direction of the axis of the first scroll casing portion while causing the first fan to pass through from the first motor side aperture portion, and treating the first fan as being exposed to a circumstance external; and
moving the blower unit along the direction of the axis of the blower unit while withdrawing the second fan from the second motor side aperture portion of the second scroll casing portion.

## Patentansprüche

1. Klimatisierungsvorrichtung zur Verwendung in einem Fahrzeug, die umfasst:
einen Einlassabschnitt (2), der konfiguriert ist, um auf einem Gehäuse (1) für eine Einheit installiert zu werden, das konfiguriert ist, eine Einrichtung zum Wärmeaustausch aufzunehmen, und um Luft in einen inneren Abschnitt des Gehäuses für die Einheit zu saugen;
eine Gebläseeinheit (40), die konfiguriert ist, um auf dem Einlassabschnitt installiert zu werden, wobei die Gebläseeinheit einen Motor (43), einen ersten Ventilator (41), der konfiguriert ist, um auf einer Seite des Motors in Richtung einer Achse des Motors installiert zu sein, und einen zweiten Ventilator (42), der konfiguriert ist, um auf der anderen Seite des Motors in Richtung der Achse des Motors installiert zu sein, umfasst;
einen ersten Spiralgehäuseabschnitt (21), der konfiguriert ist, um auf dem Einlassabschnitt installiert zu sein und eine erste Spiralkammer (21 a) zu bilden, die konfiguriert ist, um den ersten Ventilator aufzunehmen und einen Luftstrom zum Gehäuse für die Einheit zu lenken;
einen zweiten Spiralgehäuseabschnitt (22), der auf einer gemeinsamen Achse mit dem ersten Spiralgehäuseabschnitt angeordnet ist, so dass der Motor zwischen dem ersten und dem zweiten Spiralgehäuseabschnitt eingeschoben ist, und um eine zweite Spiralkammer (22a) zu bilden, die konfiguriert ist, um den zweiten Ventilator aufzunehmen und einen Luftstrom zum Gehäuse für die Einheit zu lenken;
einen ersten Motorseitenöffnungsabschnitt (21m), der konfiguriert ist, um in einem Endabschnitt des ersten Spiralgehäuseabschnitts in Richtung einer Achse des ersten Spiralgehäuseabschnitts vorgesehen zu sein und an einer Seite des Motors an einem inneren Durchmesser geöffnet zu werden, um den ersten Ventilator durch den ersten Motorseitenöffnungsabschnitt hindurch treten zu lassen;
einen ersten Einlassseitenöffnungsabschnitt (21k), der konfiguriert ist, um in dem anderen Endabschnitt des ersten Spiralgehäuseabschnitts in Richtung der Achse des ersten Spiralgehäuseabschnitts vorgesehen zu sein und an einer Seite gegenüber dem Motor geöffnet zu werden, einen ersten Einlasskasten (31) zum Einlassen von Luft, der auf dem ersten Einlassseitenöffnungsabschnitt montiert ist, wobei der erste Motorseitenöffnungsabschnitt und der erste Einlassseitenöffnungsabschnitt entlang einer Achse angeordnet sind, die gleich einer Achse der Gebläseeinheit ist;
einen zweiten Motorseitenöffnungsabschnitt (22m), der konfiguriert ist, um in einem Endabschnitt des zweiten Spiralgehäuseabschnitts in Richtung einer Achse des zweiten Spiralgehäuseabschnitts vorgesehen zu sein und an einer Seite des Motors an einem inneren Durchmesser geöffnet zu werden, um den zweiten Ventilator durch den zweiten Motorseitenöffnungsabschnitt hindurch treten zu lassen;
einen zweiten Einlassseitenöffnungsabschnitt (22k), der konfiguriert ist, um in dem anderen Endabschnitt des zweiten Spiralgehäuseabschnitts in Richtung der Achse des zweiten Spiralgehäuseabschnitts vorgesehen zu sein und an einer Seite gegenüber dem Motor geöffnet zu werden, einen zweiten Einlasskasten (32) zum Einlassen von Luft, der auf dem zweiten Einlassseitenöffnungsabschnitt montiert ist, wobei der zweiten Motorseitenöffnungsabschnitt und der zweite Einlassseitenöffnungsabschnitt entlang einer Achse angeordnet sind, die gleich der Achse der Gebläseeinheit ist;
eine Halterung (44), die konfiguriert ist, um auf einer äußeren Begrenzungsfläche des Motors montiert zu sein und um den Motor in Bezug auf das Gehäuse der Einheit lagern zu können;
ein erstes Abdeckelement (442), das konfiguriert ist, um den ersten Motorseitenöffnungsabschnitt abzusperren; und
ein zweites Abdeckelement (443), das konfiguriert ist, um den zweiten Motorseitenöffnungsabschnitt abzusperren, wobei sowohl das erste Abdeckelement als auch das zweite Abdeckelement konfiguriert sind, um auf der Halterung installiert zu werden;
**dadurch gekennzeichnet, dass**:
der erste Spiralgehäuseabschnitt (21) so gebildet ist, um von dem Gehäuse für die Einheit lösbar und an ihm entlang der Richtung der Achse des Motors montierbar zu sein.

2. Klimatisierungsvorrichtung für die Verwendung in einem Fahrzeug nach Anspruch 1, die ferner umfasst:
eine Gleitführung, die konfiguriert ist, um den ersten Spiralgehäuseabschnitt (21) in der Bewegung entlang der Richtung der Achse des ersten Spiralgehäuseabschnitts in Bezug auf das Gehäuse der Einheit zu führen.

3. Klimatisierungsvorrichtung für die Verwendung in einem Fahrzeug nach Anspruch 2, wobei
das Gehäuse für die Einheit eine Einlassöffnung umfasst, die konfiguriert ist, um den Luftstrom von dem ersten Spiralgehäuseabschnitt in einen Innenraum des Gehäuses für die Einheit zu saugen;
ein konkav-konvexer Befestigungsstrukturabschnitt (200), der konfiguriert ist, um einen Innenraum und einen Außenraum der Einlassöffnung unterteilen zu können in einem Zustand, in dem sich eine Trennwand, die an einer Seite des ersten Spiralgehäuseabschnitts angeordnet ist, und eine Trennwand, die an einer Seite des Gehäuses für die Einheit angeordnet ist, innen und außen überschneiden, zwischen der Einlassöffnung und dem ersten Spiralgehäuseabschnitt installiert ist; und
die Trennwand des konkav-konvexen Befestigungsstrukturabschnitts, die an der Seite des ersten Spiralgehäuseabschnitts angeordnet ist, und die Trennwand des konkav-konvexen Befestigungsstrukturabschnitts, die an der Seite des Gehäuses für die Einheit angeordnet ist, auf eine verlängerte Weise entlang der Richtung der Achse des ersten Spiralgehäuseabschnitts installiert sind und die Gleitführung bilden.

4. Klimatisierungsvorrichtung für die Verwendung in einem Fahrzeug nach einem der Ansprüche 1 bis 3, wobei:
der erste Spiralgehäuseabschnitt auf einem Rand einer Begrenzungsfläche des ersten Motorseitenöffnungsabschnitts zum ersten Abdeckelement der Halterung mit Hilfe eines Befestigungsmaterials befestigt ist; und
ein Ort der Befestigung des Befestigungsmaterials auf einem Ort positioniert ist entlang der Richtung der Achse des ersten Spiralgehäuseabschnitts gegenüber dem ersten Einlassseitenöffnungsabschnitt, ohne sich mit dem ersten Ventilator zu überschneiden.

5. Klimatisierungsvorrichtung für die Verwendung in einem Fahrzeug nach einem der Ansprüche 1 bis 4, wobei:
ein Sperrmechanismus (7), der konfiguriert ist, um die Halterung zwischen einem gesperrten Zustand und einem Zustand mit gelöster Sperre umschalten zu können, indem er um die Achse des ersten Spiralgehäuseabschnitts gedreht wird, zwischen der Halterung und dem zweiten Spiralgehäuseabschnitt installiert ist.

6. Werkzeug für die Verwendung beim Ersetzen einer Komponente in Bezug auf die Klimatisierungsvorrichtung für die Verwendung in einem Fahrzeug nach Anspruch 4, wobei das Werkzeug für die Verwendung beim Ersetzen der Komponente umfasst:
einen zylindrischen Abschnitt (101), der konfiguriert ist, um von dem ersten Einlassseitenöffnungsabschnitt zu einem äußeren Unfang des ersten Ventilators eingeführt werden zu können.
wobei:
ein Führungsabschnitt (103), der konfiguriert ist, ein Werkzeug zu führen, das konfiguriert ist, um zu bewirken, dass sich das Befestigungsmaterial von dem ersten Einlassseitenöffnungsabschnitt zum Befestigungsmaterial dreht, wenn der zylindrische Abschnitt von dem ersten Einlassseitenöffnungsabschnitt zu einem äußeren Unfang des ersten Ventilators eingeführt wird, auf dem zylindrischen Abschnitt installiert ist.

7. Verfahren zum Herausziehen einer Komponente in Bezug auf die Klimatisierungsvorrichtung für die Verwendung in einem Fahrzeug nach einem der Ansprüche 1 bis 5, das die folgenden Schritte umfasst:
Herausziehen des ersten Spiralgehäuseabschnitts aus dem Gehäuse für die Einheit, Bewegen des ersten Ventilators entlang der Richtung der Achse des ersten Spiralgehäuseabschnitts und gleichzeitig Bewirken, dass der erste Ventilator von der ersten Motorseitenöffnungsabschnitt hindurch tritt, und Bearbeiten des ersten Ventilators, der zu der äußeren Umgebung freiliegt; und
Bewegen der Gebläseeinheit entlang der Richtung der Achse der Gebläseeinheit und gleichzeitig Zurückziehen des zweiten Ventilators von dem zweiten Motorseitenöffnungsabschnitt des zweiten Spiralgehäuseabschnitts.

## Revendications

1. Appareil de climatisation à utiliser dans un véhicule, comprenant :
une portion d'admission (2) configurée de façon à être installée sur un logement d'unité (1) configuré pour loger un dispositif d'échange thermique, et pour aspirer de l'air dans une portion interne du logement d'unité ;
une unité de soufflante (40) configurée pour être installée sur la portion d'entrée, l'unité de soufflante comprenant un moteur (43), un premier ventilateur (41) configuré pour être installé au niveau d'un côté du moteur dans une direction d'un axe du moteur, et un second ventilateur (42) configuré pour être installé au niveau de l'autre côté du moteur dans la direction de l'axe du moteur ;
une première portion de carter en volute (21) configurée pour être installée sur la portion d'admission et pour former une première chambre en volute (21a) configurée pour loger le premier ventilateur et pour diriger un flux de vent vers le logement d'unité ;
une seconde portion de carter en volute (22) disposée sur un axe commun avec la première portion de carter en volute de façon à prendre en sandwich le moteur entre les première et seconde portions de carter en volute et à former une seconde chambre en volute (22a) configurée pour loger le second ventilateur et pour diriger un flux de vent vers le logement d'unité ;
une première portion d'ouverture côté moteur (21m) configurée pour être agencée dans une portion d'extrémité de la première portion de carter en volute dans une direction d'un axe de la première portion de carter en volute et pour être ouverte au niveau d'un côté du moteur au niveau d'un diamètre interne de façon à pouvoir faire passer le premier ventilateur à travers la première portion d'ouverture côté moteur ;
une première portion d'ouverture côté admission (21k) configurée pour être agencée dans l'autre portion d'extrémité de la première portion de carter en volute dans la direction de l'axe de la première portion de carter en volute et pour être ouverte au niveau d'un côté opposé au moteur, une première boîte d'admission (31) pour une admission de l'air qui est montée sur la première portion d'ouverture côté admission, la première portion d'ouverture côté moteur et la première portion d'ouverture côté admission étant disposées le long d'un axe identique à un axe de l'unité de soufflante ;
une seconde portion d'ouverture côté moteur (22m) configurée pour être agencée dans une portion d'extrémité de la seconde portion de carter en volute dans une direction d'un axe de la seconde portion de carter en volute et pour être ouverte au niveau d'un côté du moteur au niveau d'un diamètre interne de façon à pouvoir faire passer le second ventilateur à travers la seconde portion d'ouverture côté moteur ;
une seconde portion d'ouverture côté admission (22k) configurée pour être agencée dans l'autre portion d'extrémité de la seconde portion de carter en volute dans la direction de l'axe de la seconde portion de carter en volute et pour être ouverte au niveau d'un côté opposé au moteur, une seconde boîte d'admission (32) pour une admission d'un air qui est montée sur la seconde portion d'ouverture côté admission, la seconde portion d'ouverture côté moteur et la seconde portion d'ouverture côté admission étant disposées le long d'un axe identique à l'axe de l'unité de soufflante ;
un support (44) configuré pour être monté sur une périphérie externe du moteur, et pour être capable de supporter le moteur par rapport au logement d'unité ;
un premier organe de capot (442) configuré pour fermer la première portion d'ouverture côté moteur ; et
un second organe de capot (443) configuré pour fermer la seconde portion d'ouverture côté moteur, le premier organe de capot et le second organe de capot étant tous deux configurés pour être installés sur le support, **caractérisé en ce que**
la première portion de carter en volute (21) est formée de façon à pouvoir être détachable de et montée sur le logement d'unité dans la direction de l'axe du moteur.

2. Appareil de climatisation à utiliser dans le véhicule selon la revendication 1, comprenant en outre :
un rail de guidage configuré pour guider la première portion de carter en volute (21) dans un mouvement le long de la direction de l'axe de la première portion de carter en volute par rapport au carter d'unité.

3. Appareil de climatisation à utiliser dans le véhicule selon la revendication 2, dans lequel :
le logement d'unité comprend une lumière d'admission configurée pour aspirer le flux de vent en provenance de la première portion de carter en volute vers un intérieur du logement d'unité ;
une portion de structure d'ajustement concave-convexe (200) configurée pour être capable de séparer un intérieur et un extérieur de la lumière d'entrée dans un état où une plaque de cloisonnement disposée au niveau d'un côté de la première portion de carter en volute et une plaque de cloisonnement disposée au niveau d'un côté du logement d'unité sont chevauchées de façon interne et externe, est installée entre la lumière d'admission et la première portion de carter en volute ; et
la plaque de cloisonnement disposée au niveau du côté de la première portion de carter en volute et la plaque de cloisonnement disposée au niveau du côté du logement d'unité de la portion de structure d'ajustement concave-convexe sont installées de façon prolongée dans la direction de l'axe de la première portion de carter en volute, et configurent le rail de guidage.

4. Appareil de climatisation à utiliser dans le véhicule selon l'une quelconque des revendications 1 à 3, dans lequel :
la première portion de carter en volute est fixée, sur un bord d'une périphérie de la première portion d'ouverture côté moteur au premier organe de capot du support au moyen d'un matériau de fixation ; et
un emplacement de la fixation du matériau de fixation est positionné sur un emplacement dans la direction de l' axe de la première portion de carter en volute, en opposition à la première portion d'ouverture côté admission sans chevauchement avec le premier ventilateur.

5. Appareil de climatisation à utiliser dans le véhicule selon l'une quelconque de la revendication 1 à la revendication 4, dans lequel :
un mécanisme de verrouillage (7) configuré pour être capable de permuter le support entre un état verrouillé et un état de verrou désenclenché en étant tourné autour de l'axe de la première portion de carter en volute, est installé entre le support et la seconde portion de carter en volute.

6. Outil à utiliser dans le remplacement d'un composant par rapport à l'appareil de climatisation à utiliser dans le véhicule selon la revendication 4, l'outil à utiliser dans le remplacement du composant comprenant :
une portion cylindrique (101) configurée pour pouvoir être insérée, depuis la première portion d'ouverture côté admission vers une circonférence externe du premier ventilateur ;
dans lequel :
une portion de guidage (103) configurée pour guider un outil configuré pour amener le matériau de fixation à tourner de la première portion d'ouverture côté admission vers le matériau de fixation, lorsque la portion cylindrique est insérée de la première portion d'ouverture côté admission vers la circonférence externe du premier ventilateur, est installée sur la portion cylindrique.

7. Procédé d'extraction d'un composant par rapport à l'appareil de climatisation à utiliser dans le véhicule selon l'une quelconque des revendications 1 à 5, comprenant les étampes :
d'extraction de la première portion de carter en volute du logement d'unité, déplacement du premier ventilateur dans la direction de l'axe de la première portion de carter en volute tout en amenant le premier ventilateur à traverser depuis la portion d'ouverture côté moteur, et traitement du premier ventilateur comme étant exposé à une circonstance extérieure ; et
de déplacement de l'unité de soufflante dans la direction de l'axe de l'unité de soufflante tout en retirant le second ventilateur de la seconde portion d'ouverture côté moteur de la seconde portion de carter en volute.
